# EUROPEAN PATENT APPLICATION

(11) **EP 1 351 011 A2**
(43) Date of publication of application: **08.10.2003**
(21) Application number: 02258919.6
(22) Date of filing: 20.12.2002
(51) Int. Cl.: F16M 11/08

(54) **Monitor**

(30) Priority: 26.03.2002 KR 2002016487
(71) Applicant: SAMSUNG ELECTRONICS CO., LTD., Suwon-City, Kyungki-do (KR)
(72) Inventor: Lee, Jae-serk, Paldal-ku, Suwon-city, Kyungki-do (KR); Lim, Seon-woo, Suwon city, Kyungki-do (KR)
(74) Representative: Geary, Stuart Lloyd

(57) **Abstract**

A monitor includes a display part (10), a base part (30) for supporting the display part (10), and a connection part (20) having a first end connected to the display part (10), and a second end connected to the base part (30). The base part (30) includes a lower plate (32) to rest on an installation surface, an upper plate (34) connected to the lower plate (32), leaving a predetermined space therebetween and formed with a through hole (34a) to receive the second end (20a) of the connection part (20), and a rotation plate (36) larger than the through hole (34a) in area, provided in the predetermined space. The rotation plate (36) is connected to the second end (20a) of the connection part (20), and rotates together with the display part (10) and the connection part (20) clockwise or anticlockwise.

## Description

The present invention relates to a monitor comprising a display part, a foot and a leg connecting the display part to the foot, the leg being rotatable relative to the foot.

LCD monitors are a well-known form of flat panel monitor. They are thin which is advantageous compared with cathode ray tube monitors. However, they are expensive and provide relatively poor quality images.

A known flat panel monitor includes a foot, a display part and a leg connecting the foot and the display. A rotation plate is provided in the foot for rotating the leg and the display part. The rotation plate protrudes out of the bottom of the foot and rests on surface on which the monitor is installed to allow the monitor to be swivelled.

However, the conventional monitor tends to be unstable because the rotation plate protrudes out of the bottom of the foot and can be shaken by a slight external force such as generated by typing on a keyboard nearby.

A monitor according to the present invention is characterised in that the foot comprises an aperture and a bearing surface adjacent to the aperture, on which the leg is supported, and a leg-retaining element, e.g. a plate, is located within the foot and attached to the leg such that the leg is free to rotate relative to the foot but cannot be removed from the foot.

Preferably, the leg-retaining element is configured that it cannot pass through the aperture while it is attached to the leg.

Preferably, the leg-retaining element has a projecting peripheral portion, which may be arcuate, and the foot includes a stop structure arranged to be contacted by the ends of the peripheral portion of the leg-retaining element to limit the rotation of the leg relative to the foot.

Preferably, the bearing surface comprises a surface of a recess in the top of the foot. More preferably, the bearing suface is the floor of an annular channel surrounding said aperture.

Preferably, the foot comprises a bottom plate and a bolt extends through the bottom plate and threadingly engages the leg.

An embodiment of the present invention will now be described, by way of example, with reference to the accompanying drawings, in which:-
Figure 1 is a perspective view of a monitor according to the present invention;
Figure 2 is an exploded perspective view of the monitor of Figure 1;
Figure 3 is a bottom perspective view of the monitor of Figure 2;
Figure 4 is a perspective view of the monitor of Figure 3 illustrating the bolt; and
Figures 5A and 5B illustrate swivelling of the monitor of Figure 1.

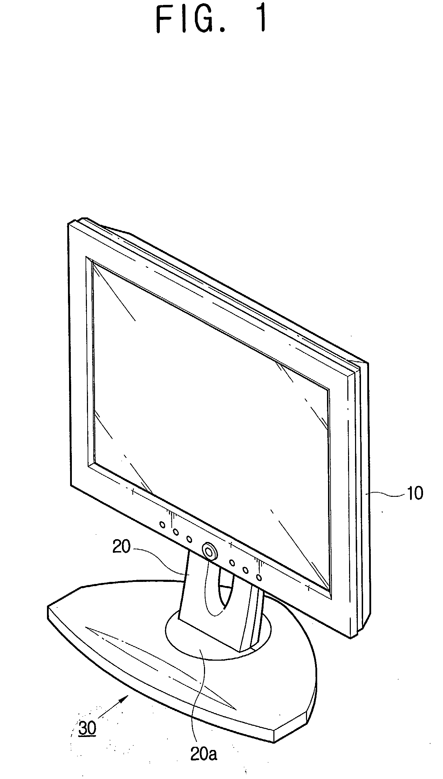

Referring to Figure 1, a monitor according to the present invention includes a display part 10 for displaying images, a foot 30 to support the display part 10, a leg 20 having a first end connected to the display part 10 and a second end 20a connected to the foot 30 so as to support the display part 10 above the foot 30.

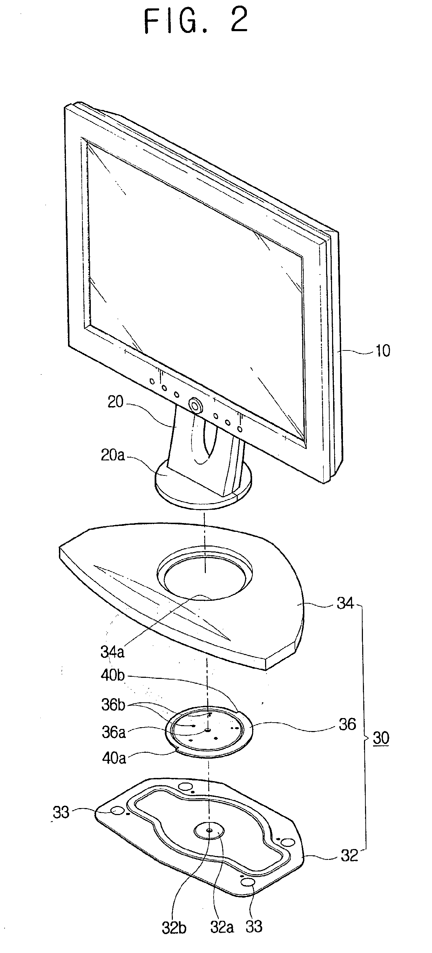

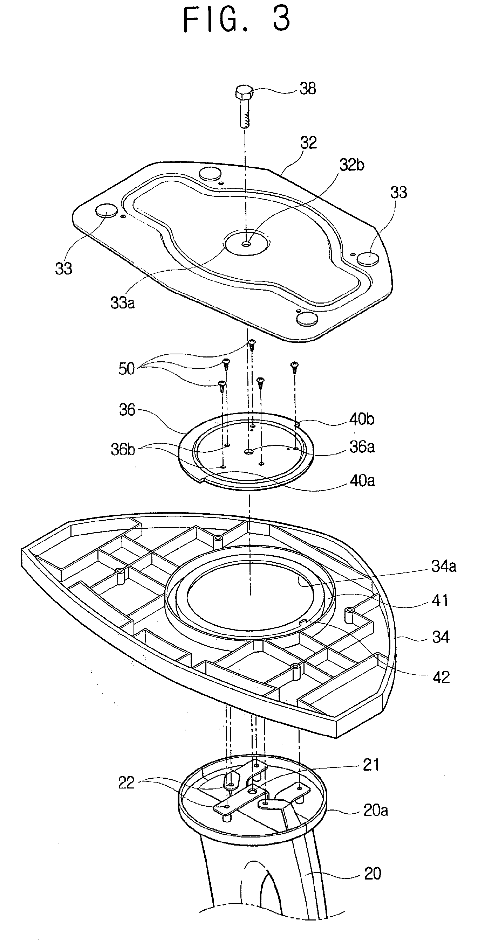

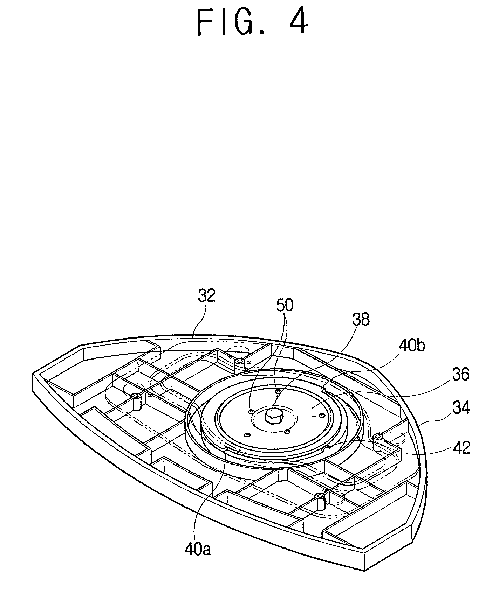

Referring to Figures 2 to 4, the foot 30 includes a plate 32 which is intended to rest on an surface such as the top of a desk, a table, or the like, a cover 34 connected to and covering the plate 32 so as to leave a space therebetween, and a disc 36 provided in the space.

The plate 32 is flat and has four pads 33 which support the foot elastically on the underlying surface. Furthermore, the plate 32 has a central recessed part 32a.

The recessed part 32a prevents the head of a bolt 38 (described below) from protruding toward and contacting the underlying surface. If the head of the bolt 38 were to protrude too far, the monitor would be unstable and the supporting surface might be damaged. Therefore, the recessed part 32a wholly receives the head of the bolt 38, thereby allowing monitor to be stably supported on the underlying surface. The bolt 38 is preferably partially threaded.

The second end 20a of the leg 20 has a threaded axially extending hole 21 into which the bolt 38 is screwed. The disc 36 and the recessed part 32a have unthreaded through holes 36a, 32b through which the bolt 38 extends.

An aperture 34a is provided in the cover 34 and the second end 20a of the leg 20 is partially received in the aperture 34a and is connected to the disc 36 by the bolt 38. Because a portion of the disc 36 is larger than the through hole 34a, the disc 36 prevents the leg 20 from being detached from the through hole 34a when the disc 36 is connected to the second end 20a. Furthermore, the disc 36 is rotated together with the display part 10 and the leg 20.

A plurality of through holes 36b are formed in the disc 36. Corresponding threaded holes 22 are provided at the bottom of the leg 20. The disc 36 is attached to the bottom of the leg 20 by screws 50 extending through the through holes 50 and screwed into the threaded holes 22.

A rotation restriction unit restricts swivelling of the display part 10 with respect to the foot 30 within a predetermined angular range. Thus, the display part 10 cannot be swivelled in an unlimited manner. The rotation restriction unit includes first and second rotation restriction projections 40a, 40b, which are provided on the circumference of the disc 36 and are spaced from each other by a predetermined angular distance, and a guide part 41, which is formed inside the cover 34 and has a projection 42. The guide part 41 guides the rotation restriction projections 40a, 40b.

The second end 20a is partially inserted into the through hole 34a of the cover 34, and is connected to the disc 36 with the bolt 38, putting the recess part 32a of the plate 32 between the disc 36 and the bolt 38.

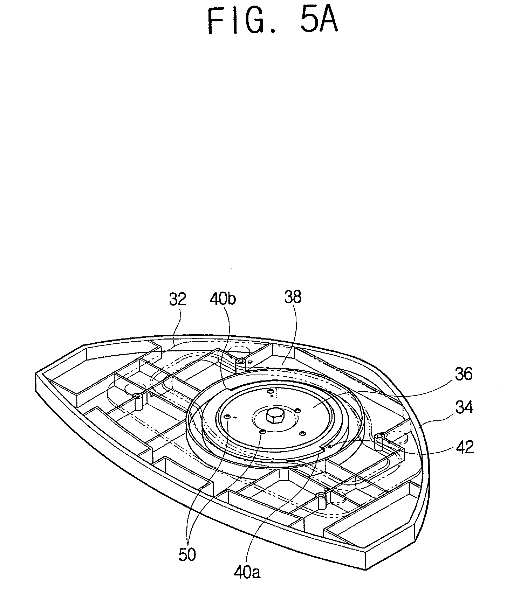

Thus, as shown in Figure 5A, when the display part 10 is swiveled clockwise, the disc 36 is rotated together with the display part 10 and guided by the guide part 41. The display part 10 can be swiveled until the first rotation restriction projection 40a is stopped by the projection 42 formed in the guide part 41, thereby restricting clockwise swiveling of the display part 10.

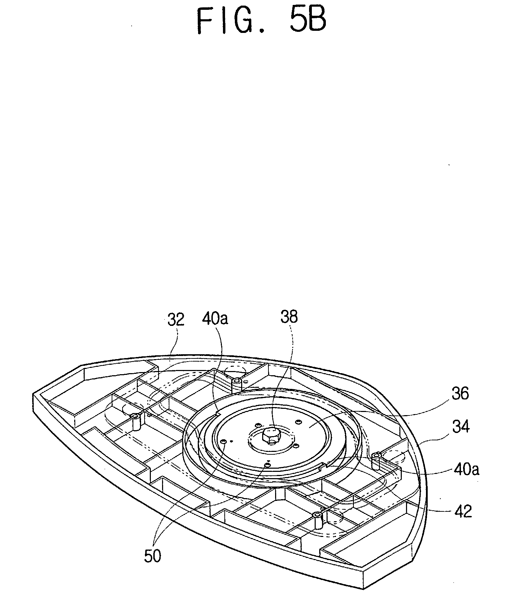

On the other hand, as shown in Figure 5B, when the display part 10 is swiveled anticlockwise, the disc 36 is rotated together with the display part 10 and guided by the guide part 41. At this time, the display part 10 can be swiveled until the second rotation restriction projection 40b is stopped by the projection 42 formed in the guide part 41, thereby restricting anticlockwise swiveling of the display part 10.

As described above, the foot 30 is stably supported on the installation surface because the disc 36 is provided in the space between the cover 34 and the plate 32 and connected to the second end 20a of the leg 20. Furthermore, swiveling of the display part 10 is restricted to a predetermined angular range because of the first and second rotation restriction projections 40a, 40b and the guide part 41 having the projection 42.

In the foregoing embodiment, the first and second rotation restriction projections 40a, 40b are formed in the disc 36, and the guide part 41 is formed in the cover 34. However, the first and second rotation restriction projections may be formed in the upper plate 34, and the guide part 41 may be formed in the disc 36.

As described above, the present invention provides a monitor which is stable on an installation surface and has an improved swiveling structure.

## Claims

1. A monitor comprising:
a display part (10);
a foot (30); and
a leg (20) connecting the display part (10) to the foot (30), the leg (20) being rotatable relative to the foot (30),
**characterised in that**
the foot (30) comprises an aperture (34a) and a bearing surface adjacent to the aperture (34a), on which the leg (20) is supported, and a leg-retaining element (36) is located within the foot (30) and attached to the leg (20) such that the leg (20) is free to rotate relative to the foot (30) but cannot be removed from the foot (30).

2. A monitor according to claim 1, wherein the leg-retaining element (36) is configured that it cannot pass through the aperture (34a) while it is attached to the leg (20).

3. A monitor according to claim 1 or 2, wherein the leg-retaining element (36) has a projecting peripheral portion and the foot (30) includes a stop structure (42) arranged to be contacted by the ends (40a, 40b) of the peripheral portion of the leg-retaining element (36) to limit the rotation of the leg (20) relative to the foot (30).

4. A monitor according to claim 1, 2 or 3, wherein said bearing surface comprises a surface of a recess in the top of the foot (30).

5. A monitor according to claim 4, wherein the bearing suface is the floor of an annular channel surrounding said aperture (34a).

6. A monitor according to any preceding claim, wherein the foot (30) comprises a bottom plate (32) and a bolt (38) extends through the bottom plate (32) and threadingly engages the leg (20).

7. A monitor to rest on an installation surface, comprising:
a display part to display a picture;
a base part to support the display part; and
a connection part having a first end connected to the display part, and a second end connected to the base part,
the base part comprising:
a lower plate to rest on the installation surface,
an upper plate connected to the lower plate to form a space therebetween, and forming a through hole in which the second end of the connection part is partially inserted, and
a rotation plate having an area larger than an area of the through hole, provided in the space between the upper and lower plates, connected to the second end of the connection part, and rotating together with the display part and the connection part.

8. The monitor according to claim 7, further comprising a rotation restriction unit to restrict the rotation of the display part within a predetermined angle.

9. The monitor according to claim 8, wherein the rotation restriction unit comprises:
a rotation restriction projection formed in an inside portion of the upper plate or a circumference of the rotation plate, to restrict the rotation of the display part; and
a guide part formed in the other one of the inside portion of the upper plate or the circumference of the rotation plate, having a guide projection to guide and stop the rotation restriction projection.

10. The monitor according to claim 9, wherein the rotation restriction projection comprises a pair of projections provided on the circumference of the rotation plate and spaced from each other.

11. The monitor according to claim 7, further comprising a combination pin connected to the rotation plate and the connection part, and passing through the lower plate.

12. The monitor according to claim 11, wherein the lower plate is formed with a recess part thereon to prevent the combination pin from being contacted with the installation surface.

13. A monitor to rest on an installation surface, comprising:
a display to display an image;
a base to rotatably support the display, comprising a rotation plate to rotate with the display, the rotation plate not contacting the installation surface; and
a connecter to connect the display and the base.

14. The monitor according to claim 13, wherein the base further comprises:
a lower plate to rest on the installation surface; and
an upper plate contacting the lower plate and forming a space therebetween,
wherein the rotation plate is inserted into the space formed between the upper and lower plates.

15. The monitor according to claim 14, wherein the upper plate forms a through hole therein, and the connector comprises:
a first end connected to the display; and
a second end connected to the rotation plate and inserted into the through hole.

16. The monitor according to claim 15, wherein an area of the rotation plate is greater than an area of the through hole.

17. The monitor according to claim 15, wherein the lower plate comprises a buffer member to elastically support the display on the installation surface.

18. The monitor according to claim 14, further comprising a pin connected to the rotation plate and the connector, and passing through the lower plate without contacting the installation surface.

19. The monitor according to claim 18, wherein the lower plate is formed with a recess to receive the pin and thereby prevent the pin from contacting the installation surface.

20. A monitor to rest on an installation surface, comprising:
a display to display an image;
a base to rotatably support the display; and
a connecter to connect the display and the base,
the display being stably supported by the base.
